# EUROPEAN PATENT SPECIFICATION

(11) **EP 2 356 175 B1**
(45) Date of publication and mention of the grant of the patent: **19.09.2012**
(21) Application number: 09752955.6
(22) Date of filing: 04.11.2009
(51) Int. Cl.: C08L 23/10, H01B 3/44, C08L 23/12

(54) **MULTIPHASE POLYMERIC COMPOSITION USEFUL FOR PREPARING CABLE INSULATION**
MEHRPHASIGE POLYMERZUSAMMENSETZUNG ZUR HERSTELLUNG VON KABELISOLIERUNG
COMPOSITION POLYMÈRE MULTIPHASE UTILE POUR PRÉPARER UNE ISOLATION DE CÂBLE

(30) Priority: 19.11.2008 US 116019 P
(43) Date of publication of application: 17.08.2011
(73) Proprietor: Union Carbide Chemicals & Plastics Technology LLC, Midland, MI 48674 (US)
(72) Inventor: HAN, Suh, J., Belle Mead NJ 08502 (US); WASSERMAN, Scott, H., Morganville NJ 07751 (US); MENDELSOHN, Alfred, Brooklyn NY 11210 (US)
(74) Representative: Hayes, Adrian Chetwynd
(86) International application number: PCT/US2009/063250
(87) International publication number: WO 2010/059425

(56) References cited:
- WO-A1-2006/007918
- WO-A1-2007/118659
- WO-A1-2008/079483

## Description

### FIELD OF THE INVENTION

This invention relates to cable insulation. In one aspect, the invention relates to a thermoplastic, heterogeneous polymeric composition useful for the preparation of cable insulation having excellent mechanical and electrical properties while in another aspect, the invention relates to a heterophasic composition comprising a polypropylene matrix and a dispersed propylene copolymer with a particle size distribution of less than one micron.

### BACKGROUND OF THE INVENTION

Ethylene polymers are widely used as an insulation layer for low, medium, high and extra high voltage cables. In low voltage cable applications, polyvinyl chloride (PVC) compounds containing a plasticizer are commonly used as an insulation material. The addition of plasticizer in PVC compounds is important because it allows the PVC compounds to be flexible as an insulation material. However, from an environmental safety point of view, the addition of plasticizer into PVC is regarded as a potential risk for environmental protection.

In medium, high and extra high voltage cables, crosslinked polyethylene is the primary choice as an insulation layer for power cables. Organic peroxides are added to the polyethylene compounds, and the compounds are then typically crosslinked in a continuous vulcanization (CV) tube at high temperature in a hot nitrogen environment. The operational temperature for medium and high voltage cable is rated up to 90°C as a global standard in many industrial specifications.

One disadvantage of crosslinked polyethylene is that it is difficult to recycle. Another disadvantage is that the organic peroxide within the crosslinked polyethylene is known to negatively impact the cable manufacturing process at a number of different levels. For one, the organic peroxide promotes scorch, i.e., premature crosslinking, during extrusion, and this, in turn, deteriorates the dielectric properties of insulation layer. For another, the time for peroxide-initiated crosslinking of the polyethylene is limited to a large degree to the time the polyethylene is resident in the CV tube. If this time is too short or too long, the level of crosslinking will be too little or too much. For yet another, the organic peroxide must be degassed from the crosslinked polyethylene after the continuous vulcanization, and this degassing process is slow and can constitute a bottleneck in the cable manufacturing process.

Consequently, an on-going need to develop new insulation compounds without the use of peroxide and that will yield medium, high and extra high insulation layers that can operate at a temperature of 90°C or greater remains of continuing interest to the cable manufacturing industry. Preferably, these new thermoplastic insulation compounds will exhibit less scorch and higher extrusion speeds, and will eliminate the CV and degassing steps.

WO 00/41187 discloses insulation compounds that are based on a noncrosslinked polymer comprising a heterogeneous copolymer with an ethylene-based elastomer phase copolymerized with an α-olefin and a propylene-based thermoplastic phase, characterized in that the said elastomeric phase in the said heterogeneous copolymer is at least 45 % by weight relative to the total weight of the heterogeneous copolymer, and in that the said heterogeneous copolymer is essentially free of crystallinity deriving from polyethylene sequences.

EP 1 619 217 A1 discloses insulation layers for cables comprising a heterophasic polymer composition that comprises a polypropylene matrix and a dispersed propylene copolymer having a weight average particle size of less than 1 micron. The comonomer content in the polypropylene matrix is 0.5 to 10 weight percent (wt%). The comonomer in the dispersed polypropylene copolymer can be one or more of ethylene and a C₄₋₈ α-olefin. The comonomer content in the dispersed polypropylene copolymer is 30 to 70 wt%, and the dispersed polypropylene copolymer is preferably substantially amorphous.

### BRIEF SUMMARY OF THE INVENTION

In one embodiment, the invention is a cable insulation layer having excellent mechanical and electrical properties, the insulation layer made from a composite free of plasticizer and comprising a heterogeneous, polymeric composition comprising (A) a polypropylene matrix, and (B) a propylene copolymer dispersed within the matrix and (1) comprising more than 85 weight percent (wt%) of units derived from propylene, and (2) having a weight average particle size of less of than 1 micron (µm). The insulation layer is not only environmental friendly due to the lack of placticizer, but it also maintains its physical and operational integrity at temperatures of at least 90°C. This is due to a relatively high elastic modulus exhibited by the composite at elevated temperatures as compared to high density polyethylene (HDPE), PVC and cross-linked low density polyethylene. Moreover, the insulation layer has attractive mechanical properties, e.g., a suitable balance between impact strength and flexural modulus.

The insulation layer can comprise other materials, e.g., carbon black, but preferably the layer comprises at least 90, more preferably at least 95, wt% of the heterophasic polymer composition.

### DETAILED DESCRIPTION OF THE PREFERRED EMBODIMENT

All references to the Periodic Table of the Elements refer to the Periodic Table of the Elements published and copyrighted by CRC Press, Inc., 2003. Also, any references to a Group or Groups shall be to the Group or Groups reflected in this Periodic Table of the Elements using the IUPAC system for numbering groups. Unless stated to the contrary, implicit from the context, or customary in the art, all parts and percents are based on weight and all test methods are current as of the filing date of this disclosure.

The terms "comprising", "including", "having" and their derivatives are not intended to exclude the presence of any additional component, step or procedure, whether or not the same is specifically disclosed. In order to avoid any doubt, all compositions claimed through use of the term "comprising" may include any additional additive, adjuvant, or compound whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically delineated or listed. The term "or", unless stated otherwise, refers to the listed members individually as well as in any combination.

As used with respect to a chemical compound, unless specifically indicated otherwise, the singular includes all isomeric forms and vice versa (for example, "hexane", includes all isomers of hexane individually or collectively). The terms "compound" and "complex" are used interchangeably to refer to organic-, inorganic- and organometal compounds. The term, "atom" refers to the smallest constituent of an element regardless of ionic state, that is, whether or not the same bears a charge or partial charge or is bonded to another atom. The term "amorphous" refers to a polymer lacking a crystalline melting point as determined by differential scanning calorimetry (DSC) or equivalent technique.

The numerical ranges in this disclosure are approximate, and thus may include values outside of the range unless otherwise indicated. Numerical ranges include all values from and including the lower and the upper values, in increments of one unit, provided that there is a separation of at least two units between any lower value and any higher value. As an example, if a compositional, physical or other property, such as, for example, molecular weight, viscosity, melt index, etc., is from 100 to 1,000, it is intended that all individual values, such as 100, 101, 102, etc., and sub ranges, such as 100 to 144, 155 to 170, 197 to 200, etc., are expressly enumerated. For ranges containing values which are less than one or containing fractional numbers greater than one (e.g., 1.1, 1.5, etc.), one unit is considered to be 0.0001, 0.001, 0.01 or 0.1, as appropriate. For ranges containing single digit numbers less than ten (e.g., 1 to 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the particle size distribution of the dispersed phase, the comonomer content of both the matrix and dispersed polymers, and various temperatures and other process ranges.

"Cable," "power cable," and like terms means at least one wire or optical fiber within a protective jacket or sheath. "Sheath" is a generic term and as used in relation to cables, it includes insulation coverings or layers, protective jackets and the like. Typically, a cable is two or more wires or optical fibers bound together in a common protective jacket. The individual wires or fibers inside the jacket may be bare, covered or insulated. Combination cables may contain both electrical wires and optical fibers. The cable can be designed for low, medium, high and extra high voltage applications. Extra high voltage cable means cable rated to carry 161 or more kiloVolts (k.V). High voltage cable means cable rated to carry voltages of greater than or equal to (≥) 36 kV and less than or equal to (≤) 160 kV. Medium voltage cable means cable rated to carry voltages of ≥6 and <36 kV. Low voltage cable means cable rated to carry voltages of <6 kV. Typical cable designs are illustrated in USP 5,246,783, 6,496,629 and 6,714,707.

"Polymer" means a polymeric compound prepared by polymerizing monomers, whether of the same or a different type. The generic term polymer thus embraces the term homopolymer, usually employed to refer to polymers prepared from only one type of monomer, and the term interpolymer as defined below. It also embraces all forms of interpolymers, e.g., random, block, homogeneous, heterogeneous, etc. The terms "ethylene/α-olefin polymer" and "propylene/α-olefin polymer" are indicative of interpolymers as described below.

"Interpolymer" and "copolymer" mean a polymer prepared by the polymerization of at least two different types of monomers. These generic terms include both classical copolymers, i.e., polymers prepared from two different types of monomers, and polymers prepared from more than two different types of monomers, e.g., terpolymers, tetrapolymers, etc.

"Propylene polymer", "propylene copolymer", "polypropylene" and like terms mean a polymer containing units derived from propylene. Propylene polymers typically comprises at least 50 mole percent (mol%) of units derived from propylene.

"Blend," "polymer blend" and like terms mean a blend of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art.

"Composition" and like terms mean a mixture or blend of two or more components. For example, in the context of preparing the thermoplastic insulation compound of this invention, a composition would include at least one matrix propylene polymer and at least one propylene dispersed polymer. In the context of preparing a cable sheath or other article of manufacture, a composition would include a thermoplastic insulation compound of this invention, peroxide and any desired additives such as lubricant, fillers, anti-oxidants and the like.

"Ambient conditions" and like terms means a temperature of 23°C and atmospheric pressure.

"Plasticizer" and like terms means additives that increase the plasticity of the plastic to which they are added. Plasticizers soften the final plastic product increasing its flexibility. Plasticizers are commonly phthalates that give hard plastics like polyvinyl chloride (PVC) a desired flexibility and durability. They are often based on esters of polycarboxylic acids with linear or branched aliphatic alcohols of moderate chain length. Plasticizers work by embedding themselves between the chains of polymers spacing them apart (increasing the "free volume" of the plastic), and thus significantly lowering the glass transition (Tg) temperature for the plastic and making it softer. For plastics such as PVC, the more plasticizer added, the lower its cold flex temperature will be. This means that it will be more flexible, though its strength and hardness will decrease as a result of it. Some plasticizers evaporate and tend to concentrate in an enclosed space.

### Matrix Polypropylene

The polypropylene used in the matrix phase of the composition can be either a homopolymer or a copolymer. By homopolymer is meant that the polypropylene comprises at least 99, preferably at least 99.5, weight percent of units derived from propylene. Preferably the matrix polypropylene is a copolymer, more preferably a random copolymer, comprising from 1 to 10, preferably from 1 to 8 and more preferably from 2 to 6, weight percent of units derived from ethylene and/or a C₄₋₈ alpha-olefin with the remainder of the copolymer units derived from propylene. The preferred C₄₋₈ alpha-olefins include 1-butene, 1-pentene, 4-mthyl-1-pentene, 1-hexene, 1-heptene and 1-octene. In the context of this invention, a random copolymer is a copolymer consisting of alternating sequences of two monomeric units of random length (including single molecules). One preferred random copolymer consists of units derived from propylene and ethylene.

The incorporation of the comonomer reduces both the melting point and the crystallinity of the polypropylene matrix, the latter becoming effective in a reduction of the melting enthalpy as determined in DSC (ISO 3146). If ethylene is the comonomer, then the melting points of such polymers are preferably in the range of 120 to 162°C, more preferably in the range of 130 to 160°C, while the melting enthalpies are in the range of preferably 40 to 95, more preferably 60 to 90, J/g.

For combining optimum processability with the required mechanical properties, the incorporation of the comonomer can be controlled in such a way that one part of the polypropylene contains more comonomer than another part. To ensure suitability for the purpose of this patent these intra-polymeric differences in comonomer content must not exceed a level which still allows full miscibility of all parts of the polymer. Suitable polypropylenes are described in, e.g., WO 03/002652 (Propylene Random Copolymer and Process for the Production Thereof).

### Dispersed Propylene Copolymer

The dispersed propylene copolymer, i.e., the propylene copolymer contained within the polypropylene matrix, is substantially amorphous, i.e., it does not have a definite order or crystallinity as expressed by a lack of melting point and enthalpy as measured by differential scanning calorimetry (DSC). Substantially amorphous means that the propylene copolymer has a residual crystallinity below a level corresponding to a melting enthalpy of 10 Joules per gram (J/g).

The propylene copolymer dispersed in the polypropylene matrix comprises at least one comonomer selected from the group consisting of ethylene and C₄₋₈ alpha-olefin. Preferred C₄₋₈ alpha-olefins include 1-butene, 1-pentene, 4-methyl-1-pentene, 1-hexene, 1-heptene and 1-octene. Typically the total comonomer content, e.g., ethylene and/or C₄₋₈ alpha-olefin and/or diene, of the propylene copolymer is more than 1 wt% and less than 15 wt%.

Important to this invention is that the propylene copolymer has a particle size of less than 1, preferably less 0.9 and more preferably less than 0.8, microns (µm). This particle size allows a good particle distribution in the matrix and influences the impact strength of the insulation layer positively. Moreover, a low average particle size decreases the risk of crazes being initiated by these particles while improving the possibility of the particles to stop already formed crazes or cracks. The particle size distribution of the propylene copolymer in the polypropylene matrix can be determined by any suitable microscopic method. Examples of such methods include atomic force microscopy (AFM), scanning electron microscopy (SEM) and transmission electron microscopy (TEM). Etching and/or staining of the specimens is normally required to achieve the necessary revolution and clarity of images. Examples for the determination of the particle size distribution and the calculation of the weight average particle size are available in the literature. One suitable method involving SEM on specimens stained with RuO₄ is described in Pölt et al. J. Appl. Polym. Sci. 78 (2000) 1152-61. This SEM has been used to determine the weight average particle size in the present invention.

### Heterophasic Composition

The heterophasic polymer compositions of this invention comprise a polypropylene matrix in which a propylene copolymer having a lower structural order than the matrix is dispersed.

To achieve a good balance of properties in the insulation layer, the amount of propylene matrix and the amount of the propylene copolymer dispersed in the matrix is important. The matrix gives the insulation layer the stiffness and tensile strength, and the propylene copolymer improves the impact strength. Hence, the composition typically comprises 50-90 wt% of the polypropylene matrix, more typically 55-85 wt% and even more typically 60-80 wt%. Since the amount and particle size of the propylene copolymer has a positive influence on the impact strength of the composition typically comprises 10-50 wt% of the propylene copolymer dispersed in the propylene matrix, more typically 15-45 wt% and even more typically 20-40 wt%.

### Composite

The composite, i.e., the material from which the insulation layer is made, is a thermoplastic composition, i.e., it is capable of being repeatedly melted by increasing temperature and solidified by decreasing temperature. Thermoplastic materials are those materials the change of which upon heating is substantially physical rather than chemical. They are largely two- or one-dimensional molecule structures. Preferably, the composite is a thermoplastic polyolefin composition.

The composite typically has a melt flow rate (MFR) as measured according to ISO 1133 at 230°C and under a load of 2.16 kilogram (kg) of 0.5 to 50 grams per 10 minutes (g/10 min), more typically of 0.55 to 20 g/10 min, and even more typically of 0.5 to 8 g/10min. The MFR is measured in g/10 min of the polymer discharged through a defined die under specified temperature and pressure conditions and is a measure of the viscosity of the polymer which in turn for each type of polymer is mainly influenced by its molecular weight (and by its degree of branching). Long molecules give the material a lower flow tendency than short molecules. An increase in molecular weight means a decrease in the MFR value.

The density of composite is typically in the range of 0.89 to 0.95, more typically in the range of 0.90 to 0.93, grams per cubic centimeter (g/cm³). Density is measured according to ISO 11883. The density has influence on the property of the insulation layer such as impact strength and shrinkage characteristics. Additionally, the optimum dispersion of possible additives in the composite is dependent in part on the choice of the density. For this reason, a balance between these properties is desirable.

Besides the heterophasic polymer composition, the composite can further comprise a polyethylene. With the addition of a polyethylene, the mechanical properties of the composite and insulation layer made from the composite can be further adapted to the environmental circumstances, e.g., if a further improvement of impact strength, softness or resistance to stress whitening (blush) is required, then this can be achieved by incorporating a suitable polyethylene. The modulus of the polyethylene added should be lower than the modulus of the polypropylene matrix to ensure a positive influence. Preferably the density of the polyethylene is 0.930 g/cm³ or less, including both high pressure, low density polyethylenes (HPLDPE) and linear low density polyethylenes (LLDPE). For cable insulation compositions, the low ash content of HPLDPE resulting from the absence of catalyst in the polymerization process can be an additional advantage.

Moreover, by adding a polyethylene as defined above to the composite comprising the heterophasic polymer composition, the impact strength of an article made from the composite is improved as can be seen by the higher values measured by the Charpy impact test. This test is a destructive test of impact resistance consisting of placing the optionally notched specimen in a horizontal position between two supports and applying a strike of known intensity, which will normally fracture the specimen. The energy uptake (damping) in this fracturing process is recorded as a measure of impact strength.

Preferred polyethylenes used for modifying the insulation composition have a density of 0.910 to 0.930 g/cm³. In a low density polyethylene (LDPE), the reduced crystallinity and density results from a random branching structure of the polymer molecules, while an LLDPE) higher-olefin, e.g., 1-butene, 1-hexene or 1-octene as the comonomer, are used to achieve an analogous effect. The resulting material is relatively soft, flexible and tough and will withstand moderate heat.

If present in the composite, then the polyethylene is present in an amount of greater than 0 to 50 or less, typically 10 to 40 and even more typically of 20 to 30, wt% based on the total weight of the composite. In addition, when polyethylene is incorporated into the composite, typically at least 50 wt% of the heterophasic composition is also present in the composite. More typically, the heterophasic composition is present in an amount of at least 60, even more typically of at least 70 and even more typically at least 80 and even more typically at least 90, wt%.

### Process for Manufacturing Articles from the Composite

The present invention also comprises a process for producing articles from the composite, e.g., cable insulation. The process comprises the steps of (1) producing the polypropylene matrix in one or more slurry reactors and, optionally, one or more gas phase reactors, followed by (2) producing the propylene copolymer in the gas phase, and (3) optionally adding polyethylene blending or *in-situ* polymerization of ethylene in the reactor system. Additives can be added to the heterophasic polymer composition by any kind of blending or mixing operation.

The slurry phase polymerization can be carried out at temperatures of lower than 75°C, preferably 60-65°C and pressure varying between 60-90 bar, preferably 30-70 bar. The polymerization is preferably carried out under such conditions that 20-90 wt%, preferably 40-80 wt%, of the polymers are polymerized in the slurry reactors. The residence time is typically between 15-20 minutes.

Preferably a loop reactor is used as the slurry reactor although other reactor types, e.g., a tank reactor, can also be employed. According to another embodiment, the slurry phase is carried out in two slurry reactors preferably, but not necessarily, in two loop reactors. The loop reactors allow for a relatively easy control of the comonomer distribution. When continuing the copolymerization in the gas phase reactor or reactors, the comonomer content can be increased further. Thus, the matrix polymer can be tailored by adjusting comonomer ratios in different reactors.

Polymerization may be achieved by using any standard olefin polymerization catalyst and these are well known to the person skilled in the art. Preferred catalyst systems comprise an ordinary stereo-specific Ziegler-Natta-catalyst, metallocene catalyst, constrained geometry catalyst and other organo-metallic or coordination catalysts. Moreover, the present invention comprises the use of the inventive insulation layer as described above for cables of all voltage ratings, i.e., low, medium, high and extra-high voltage cables.

The present invention is also related to a new cable comprising at least one conductor and at least one insulation layer. For low voltage applications the cable system preferably comprises (i) a conductor and an insulation layer, or (ii) a conductor, insulation layer and an additional jacketing layer, or (iii) a one conductor, a semiconductive layer and an insulation layer. For medium and high voltage applications it preferably comprises a conductor, in inner semiconductive layer, in insulation layer and an outer semiconductive layer, optionally covered by an additional jacketing layer. The semiconductive layers typically comprise a thermoplastic polyolefin composition containing a sufficient amount of electrically conducting solid fillers, preferably carbon black. At least one of the layers is the inventive layer mentioned above. The insulation layer, more preferably the inventive insulation layer, contains solid fillers, more preferably carbon black. Various other additives can also be incorporated into the insulation layer. Moreover, other cable layers, e.g., a semiconductive layer and/or a jacketing layer, can comprise the composite as defined above. The final cable can comprise multiple conductors or cores (normally 1, 2, 3 or 4) combined with single and common insulation layers.

The cables comprising the inventive layer typically have a very low shrinkage, preferably lower than 1.25% measured according to AEIC CS5-94, more preferably lower than 1.15%, still more preferably lower than 1.05% and most preferably lower than 1.02%. Moreover, the sagging measured according to IEC 60840 (1999) is typically lower than 15%, more preferably lower than 8%, still more preferably lower than 6.5%, and most preferably lower than 5.,5%. Preferably the cables exhibit both properties, i.e. shrinkage and sagging, simultaneously.

The present invention also comprises a process for producing cables as described above by extrusion of an insulation layer or layers onto the conductor or conductors followed by solidification of the thermoplastic polymer components at line speeds of up to 300 to 400 meters per minute (m/min). Preferably the solidification takes place in a water bath.

## Claims

1. An insulation layer for cables comprising a composite, the composite comprising a heterophasic polymer composition, the composition comprising (A) a polypropylene matrix, and (B) a propylene copolymer dispersed within the matrix, the propylene copolymer comprising (1) more than 85 weight percent (wt%) of units derived from propylene, and (2) having a weight average particle size of less than 1 micron (µm).

2. The insulation layer of Claim 1 in which the composite comprises at least 90 wt% of the layer.

3. The insulation layer of Claim 2 in which the composite has a melt flow rate (MFR) measured according to ISO 1133 of 0.5 to 50 grams per 10 minutes (g/10min).

4. The insulation layer of Claim 3 in which the composite has a density of 0.89 to 0.95 grams per cubic centimeter (g/cm³).

5. The insulation layer of Claim 4 in which the polypropylene matrix comprises 50 to 90 wt% of the heterophasic polymer composition.

6. The insulation layer of Claim 5 in which the polypropylene matrix comprises a random propylene copolymer.

7. The insulation layer of Claim 6 in which the random propylene copolymer comprises units derived from at least one comonomer of ethylene and C₄₋₈ alpha-olefin.

8. The insulation layer of Claim 7 in which the composite further comprises a polyethylene.

9. The insulation layer of Claim 1 free of plasticizer.

10. Cable comprising at least one conductor and at least one insulation layer according to any one of Claims 1 to 9.

## Patentansprüche

1. Isolierschicht für Kabel aus einem Verbundstoff, wobei der Verbundstoff eine heterophasische Polymerzusammensetzung umfasst, wobei die Zusammensetzung (A) eine Polypropylenmatrix und (B) ein in der Matrix dispergiertes Propylencopolymer umfasst, wobei das Propylencopolymer (1) mehr als 85 Gewichtsprozent (Gew.-%) von Propylen abgeleitete Einheiten umfasst und (2) eine gewichtsgemittelte Teilchengröße kleiner als 1 Mikrometer (µm) hat.

2. Isolierschicht nach Anspruch 1, wobei der Verbundstoff mindestens 90 Gew.-% der Schicht umfasst.

3. Isolierschicht nach Anspruch 2, wobei der Verbundstoff eine nach ISO 1133 gemessene Schmelzflussrate (MFR) von 0,5 bis 50 Gramm pro 10 Minuten (g/10 min) hat.

4. Isolierschicht nach Anspruch 3, wobei der Verbundstoff eine Dichte von 0,89 bis 0,95 Gramm pro Kubikzentimeter (g/cm³) hat.

5. Isolierschicht nach Anspruch 4, wobei die Polypropylenmatrix 50 bis 90 Gew.-% der heterophasischen Polymerzusammensetzung umfasst.

6. Isolierschicht nach Anspruch 5, wobei die Polypropylenmatrix ein statistisches Propylencopolymer umfasst.

7. Isolierschicht nach Anspruch 6, wobei das statistische Propylencopolymer Einheiten umfasst, die von mindestens einem Comonomer von Ethylen und C₄₋₈-alpha-Olefinen abgeleitet sind.

8. Isolierschicht nach Anspruch 7, wobei der Verbundstoff ferner ein Polyethylen umfasst.

9. Isolierschicht nach Anspruch 1 ohne Weichmacher.

10. Kabel mit mindestens einem Leiter und mindestens einer Isolierschicht nach einem der Ansprüche 1 bis 9.

## Revendications

1. Couche d'isolation pour câbles, comprenant un matériau composite, le matériau composite comprenant une composition polymère hétérophasique, la composition comprenant (A) une matrice de polypropylène et (B) un copolymère de propylène, dispersé dans la matrice, le copolymère de propylène comprenant (1) plus de 85 pour cent en poids (% pds) d'unités, dérivées du propylène et (2) ayant une taille moyenne de particule par poids de moins d'1 micron (µm).

2. Couche d'isolation selon la revendication 1, dans laquelle le matériau composite comprend au moins 90 % pds de la couche.

3. Couche d'isolation selon la revendication 2, dans laquelle le matériau composite a un taux de fusion (TF), mesuré selon la norme ISO 1133, de 0,5 à 50 grammes par 10 minutes (g/10 min).

4. Couche d'isolation selon la revendication 3, dans laquelle le matériau composite a une densité de 0,89 à 0,95 gramme par centimètre cube (g/cm³).

5. Couche d'isolation selon la revendication 4, dans laquelle la matrice de polypropylène comprend de 50 à 90 % pds de la composition polymère hétérophasique.

6. Couche d'isolation selon la revendication 5, dans laquelle la matrice de polypropylène comprend un copolymère aléatoire de propylène.

7. Couche d'isolation selon la revendication 6, dans laquelle le copolymère aléatoire de propylène comprend des unités, dérivées d'au moins un comonomère d'éthylène et d'alpha-oléfine en C₄₋₈.

8. Couche d'isolation selon la revendication 7, dans laquelle le matériau composite comprend, en outre, un polyéthylène.

9. Couche d'isolation selon la revendication 1, exempte de plastifiant.

10. Câble, comprenant au moins un conducteur et au moins une couche d'isolation, selon l'une quelconque des revendications 1 à 9.
